# EUROPEAN PATENT SPECIFICATION

(11) **EP 1 617 091 B1**
(45) Date of publication and mention of the grant of the patent: **17.10.2012**
(21) Application number: 04727404.8
(22) Date of filing: 14.04.2004
(51) Int. Cl.: F16C 33/12, F02M 37/08, B22F 5/00, C22C 1/04, C22C 9/06, B22F 1/00, C22C 32/00, F16C 33/14

(54) **ABRASION-RESISTANT BEARING OF MOTOR TYPE FUEL PUMP**
ABRIEBFESTES LAGER FÜR MOTOR-KRAFTSTOFFPUMPE
PALIER RESISTANT A L'ABRASION D'UNE POMPE A COMBUSTIBLE DE TYPE MOTEUR

(30) Priority: 23.04.2003 JP 2003117843
(43) Date of publication of application: 18.01.2006
(73) Proprietor: Diamet Corporation, Niigata-shi Niigata-ken (JP)
(72) Inventor: MARUYAMA, Tsuneo, Mitsubishi Materials Corporation, Niigata-shi, Niigata 950-8640 (JP); SHIMIZU, Teruo, Mitsubishi Materials Corporation, Niigata-shi, Niigata 950-8640 (JP)
(74) Representative: HOFFMANN EITLE
(86) International application number: PCT/JP2004/005344
(87) International publication number: WO 2004/094849

(56) References cited:
- GB-A- 2 360 294
- GB-A- 2 365 935
- JP-A- 55 119 144
- JP-A- 57 016 175
- JP-A- 2000 309 807
- JP-A- 2002 180 162
- US-A- 4 941 919

## Description

### Technical Field

The present invention relates to a bearing which is made of a Cu-Ni based sintering metal having excellent wear resistance, corrosion resistance and high-strength, and which is thus particularly suitable for downsizing and downweighting a motor-type fuel pump and exerts excellent wear resistance for a long time at the time of being used.

### Background Art

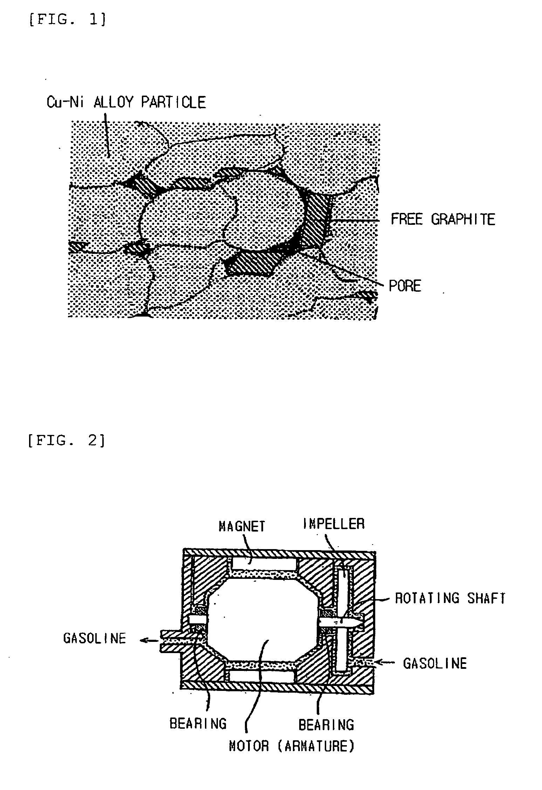

Conventionally, an engine, which generally uses a liquid fuel such as gasoline or diesel oil as a fuel, is equipped with a motor-type fuel pump. For example, a structure schematically shown by a cross-sectional view in FIG. 2 has been known as a motor-type fuel pump for a gasoline engine.

That is, as shown, in the motor-type fuel pump, a rotating shaft provided on both ends of a motor is supported by bearings in a casing, and an impeller is provided on one end of the rotating shaft. In addition, narrow gasoline passages are formed along clearances (not shown) between outer circumferential surfaces of the impeller and the motor (armature), and the bearings and the rotating shaft. In this case, rotation of the motor causes the impeller to rotate, and the rotation of the impeller forces gasoline to be introduced in the casing. Then, the gasoline introduced in the casing is delivered through the gasoline passages formed along the clearances (not shown) between outer circumferential surfaces of the impeller and the motor (armature), and the bearings and the rotating shaft to enter a separate gasoline engine. Furthermore, in Fig. 2, a small quantity of fuel passes through the outer circumferences of the bearings, and the gasoline pressurized by the impeller flows through fuel passages (not shown) of the casing to reach the outer circumferential surface of the armature. Moreover, a variety of high-strength Cu based sintering metals is used as a material of the bearing that is a structural member of the motor-type fuel pump (for example, see Japanese Unexamined Patent Application Publication Nos. 54-26206, 55-119144, and 57-016175).

Meanwhile, as downsizing and downweighting an engine of a vehicle is remarkably developed recently, a fuel pump used in the engine is also strongly required to be downsized and downweighted. Furthermore, in association with this, a bearing, which is a structural member thereof, is strongly required to be downsized and slimmed. However, in the case of a motor-type fuel pump having the above-mentioned structure, it is necessary to drive the motor-type fuel pump at a high speed, that is, raise revolution speed thereof in order to secure discharging performance thereof and downsize it. As a result, the liquid fuel such as gasoline introduced in the fuel pump flows through narrower passages at a high pressure and flow rate. Under this condition, the bearing that is the structural member of the motor-type fuel pump needs to have higher-strength and wear resistance in connection with the downsizing and slimming of the bearing. The bearings made of Cu based sintering metal, which are used in the motor-type fuel pump having the above-mentioned structure, all have high-strength, but does not have sufficient wear resistance. Such a bearing is known from GB 2,365,935. For this reason, abrasion is rapidly generated, and this rapid abrasion is further facilitated when the liquid fuel contains sulfur or compounds thereof as impurities. As a result, the use life span actually ends within a relatively short time.

Therefore, from the above point of view, the inventors have made a study to develop the bearing suitable for use in the motor-type fuel pump that is downsized and is driven at a high speed. As a result, the study shows the following: when the bearing of the motor-type fuel pump is made of a sintered body of compacted powders having a following structure, excellent wear resistance and corrosion resistance are secured. The sintered body of the compacted powders has a blended composition which includes 1 to 5% of graphite, 2 to 9% of Cu-P alloy containing 5 to 10% of P, Cu-Ni alloy containing 21 to 26% of Ni, and the balance, in % by weight (hereinafter, % means % by weight). In this case, the sintered body made of a Cu-Ni based sintering metal has a structure in which pores are dispersed on a basis material of Cu-Ni alloy particles at a porosity of 8 to 18% and P components and free graphite are distributed on a boundary between the Cu-Ni alloy particles and in the pores, respectively, as shown by a schematic view of a structure photograph photographed by an optical microscope in FIG. 1. As described above, when the bearing of the motor-type fuel pump is made of above-mentioned sintered body of compacted powders, excellent wear resistance and corrosion resistance are secured by Cu-Ni alloy particles constituting the basis material. Furthermore, due to action of the free graphite that has a high lubricating property and is distributed in the air pores dispersed on the basis material, and action of a fluid lubricating film where a friction resistance applied to the bearing by a high speed of rotation of the motor generating a high-pressure and high-speed flow of the liquid fuel is formed by a liquid fuel supplied from an outer circumferential surface of the bearing to an inner circumferential surface through the air pores existing in the bearing, the corrosion resistance makes a step toward improvement. Moreover, since bonding strength between the Cu-Ni alloy particles is remarkably enhanced by action of the P component improving a sintering property between the Cu-Ni alloy particles during the sintering of the bearing, the bearing itself has high-strength. Therefore, the bearing made of the Cu-Ni based sintering metal according to this result can be made small and thin, and exerts excellent wear resistance under an environment in which the bearing is exposed to the high-pressure and high-speed flow of the liquid fuel. Moreover, the bearing has excellent wear resistance with respect to the liquid fuel containing sulfur or compounds thereof as impurities.

### Disclosure of the Invention

The invention provides a wear resistant bearing of a motor-type fuel pump. The wear resistant bearing of a motor-type fuel pump includes a sintered body of compacted powders having a blended composition which is composed of 1 to 5% of graphite, 2 to 9% of Cu-P alloy containing 5 to 10% of P, Cu-Ni alloy containing 21 to 26% of Ni, and the balance, in % by weight. The sintered body made of a Cu-Ni based sintering metal has a structure in which pores are dispersed on a basis material of Cu-Ni alloy particles at a porosity within a range of 8 to 18%, and P components and free graphite are distributed on a boundary between the Cu-Ni alloy particles and in the pores, respectively.

The following description will be described about the reason why the blended composition and porosity of the Cu-Ni based sintering metal constituting the bearing are restricted as mentioned above in the bearing of the motor-type fuel pump according to the invention.

### (1) Blended Composition

### (a) Cu-Ni Alloy

Cu-Ni alloy has excellent wear and corrosion resistances as described above, and forms a basis material made of Cu-Ni alloy particles after sintering so that the bearing itself has excellent wear and corrosion resistances. However, when a content of Ni accounts for 21% or less of the content of Cu and Ni, the bearing cannot secure excellent wear and corrosion resistances. Meanwhile, when a content ratio of Ni exceeds 26%, a sintering property rapidly deteriorates whereby it is difficult to avoid strength degradation. In consideration of this, the content ratio of Ni is set to a range of 21 to 26%.

### (b) Cu-P Alloy

P components of a Cu-P alloy serves to improve a sintering property between Cu-Ni alloys during the sintering as well as strength of a basis material composed of Cu-Ni alloy particles, that is, strength of the bearing. However, when a content of P accounts for 5% or less of the content of Cu and Ni, the bearing fails to exert sufficient sintering property. Meanwhile, when a content ratio of P exceeds 10%, strength of a boundary between the Cu-Ni alloy particles drastically deteriorates. Therefore, the content ratio of P is set to a range of 5 to 10%.

Further, when the content of P content accounts for 2% or less of the total content of the Cu-P alloy, it is not possible to secure a sufficient bonding strength between the Cu-Ni alloy particles thereby causing strength degradation. Meanwhile, when the content ratio of P exceeds 9%, it is difficult to avoid strength degradation on a boundary between the Cu-Ni alloy particles of the basis material. Therefore, the total content ratio of P is set to a range of 2 to 9%.

### (c) Graphite

Graphite mainly exists as free graphite in pores dispersed on the basis material, and acts to endow the bearing with excellent lubricating property. Furthermore, graphite contributes to improvement of the wear resistance of the bearing. However, when a content ratio of graphite accounts for 1% or less, it is impossible to obtain desired improvement of the action. Meanwhile, when the content ratio of graphite exceeds 5%, the strength drastically deteriorates. Therefore, the graphite content is set to a range of 1 to 5%.

### (2) Porosity

As described above, the pores dispersed on the basis material of the Cu-Ni alloy particles act to release strong friction and high surface-pressure applied to the bearing under high pressure and high speed flow of the liquid fuel, and to remarkably suppress abrasion of the bearing. However, when the porosity amounts to 8% or less, a ratio of the pores distributed on the basis material is too low to exert the action with sufficient satisfaction. Meanwhile, when the porosity exceeds 18%, the strength of the bearing drastically deteriorates. Therefore, the porosity is set to a range of 8 to 18%.

### Brief Description of the Drawings

FIG. 1 is a view schematically showing a structure photograph (200x) of a bearing 3 according to the invention photographed by an optical microscope.
Fig. 2 is a cross-sectional view schematically showing a motor-type fuel pump for a gasoline engine.

### Best Mode for Carrying Out the Invention

A bearing of a motor-type fuel pump according to the invention will be described in more detail with reference to an embodiment. Cu-Ni alloy powder (content ratio of Ni is shown in Tables 1 and 2), Cu-P alloy powder (content ratio of P is shown in Tables 1 and 2), graphite powder, Sn powder, Co powder, Fe powder and Cu powder are prepared as base powders, all of which has a predetermined average particle diameter within a range of 30 to 100 µm. These base powders are blended at a blended composition shown in Tables 1 and 2, and are mixed with 1% of stearic acid by a V-shaped mixer for 20 minutes. Then, the blended base powders are press-molded into a compacted powder under a predetermined pressure within a range of 400 to 500 MPa. After that, the compacted powder is sintered under an ammonia decomposition gas atmosphere at 870 °C for 40 minutes, and is finally sized at a predetermined pressure within a range of 400 to 500 MPa. In this way, bearings 1 to 15 according to the invention and conventional bearings 1 to 3 are manufactured. Each of the bearings is made of a Cu-Ni based sintering metal or Cu based sintering metal having a porosity shown in Tables 1 and 2, and has a dimension of outer diameter 9 mm x inner diameter 5 mm x height 6 mm.

With regard to the bearings 1 to 15 according to the invention and the conventional bearings 1 to 3, which have been obtained in this way, arbitrary cross sections thereof are observed using an optical microscope (200 x). As a result of the observation, all of the bearings 1 to 15 according to the invention has a structure in which pores are dispersed on a basis material of Cu-Ni alloy particles at a porosity within the range of 8 to 18%, and P components and free graphite are distributed on a boundary between the Cu-Ni alloy particles and in the pores, respectively. Meanwhile, all of the conventional bearings 1 to 3 has a structure in which free graphite is dispersed on a basis material of Cu based alloy.

Further, FIG. 1 is a view schematically showing a structure photograph of a bearing 3 according to the invention photographed by an optical microscope.

Subsequently, the bearings 1 to 15 according to the invention and the conventional bearings 1 to 3 are each mounted on a fuel pump having an external size of length 110 mm x diameter 40 mm. The fuel pump is installed in a gasoline tank. Under the conditions of 5000 (minimum rpm) to 15000 (maximum rpm) rpm of revolution speed of an impeller, 50 liter/hour (minimum flow rate) to 250 liter/hour (maximum flow rate) of a flow rate of gasoline, maximum 500 KPa of pressure applied from a high speed rotating shaft to the bearing, and 500 hours of a test time, that is, under the conditions that the gasoline flows through a narrow gap at a high speed and the high pressure is applied to the bearing by the high speed rotating shaft of the motor generating such a flow, a practical test is performed on the gasoline flowing at a high speed under a desired condition. A maximum abrasion depth on a bearing surface is measured after the test. The results of the measurement are also shown in Tables 1 and 2. Furthermore, for the purpose of evaluating the strength, compressive crushing strength of each of the bearings is shown in Tables 1 and 2.

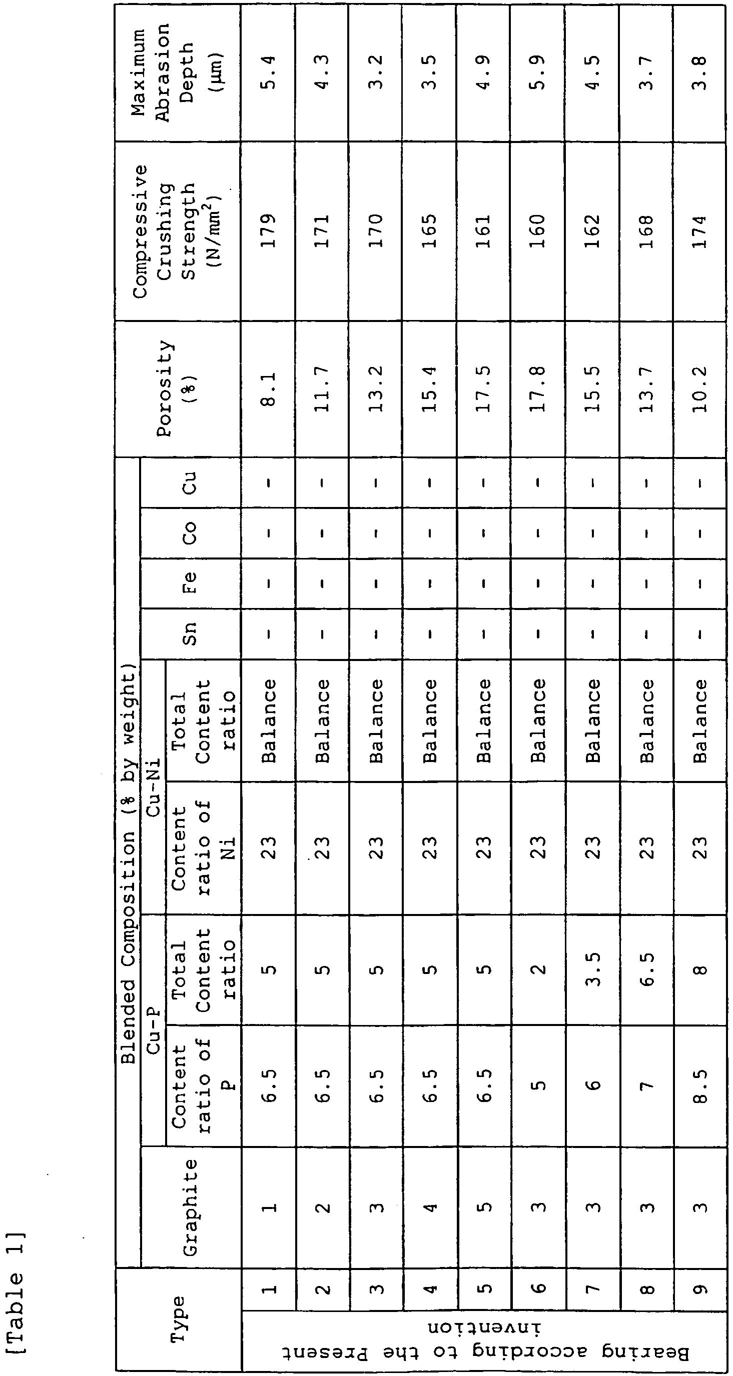

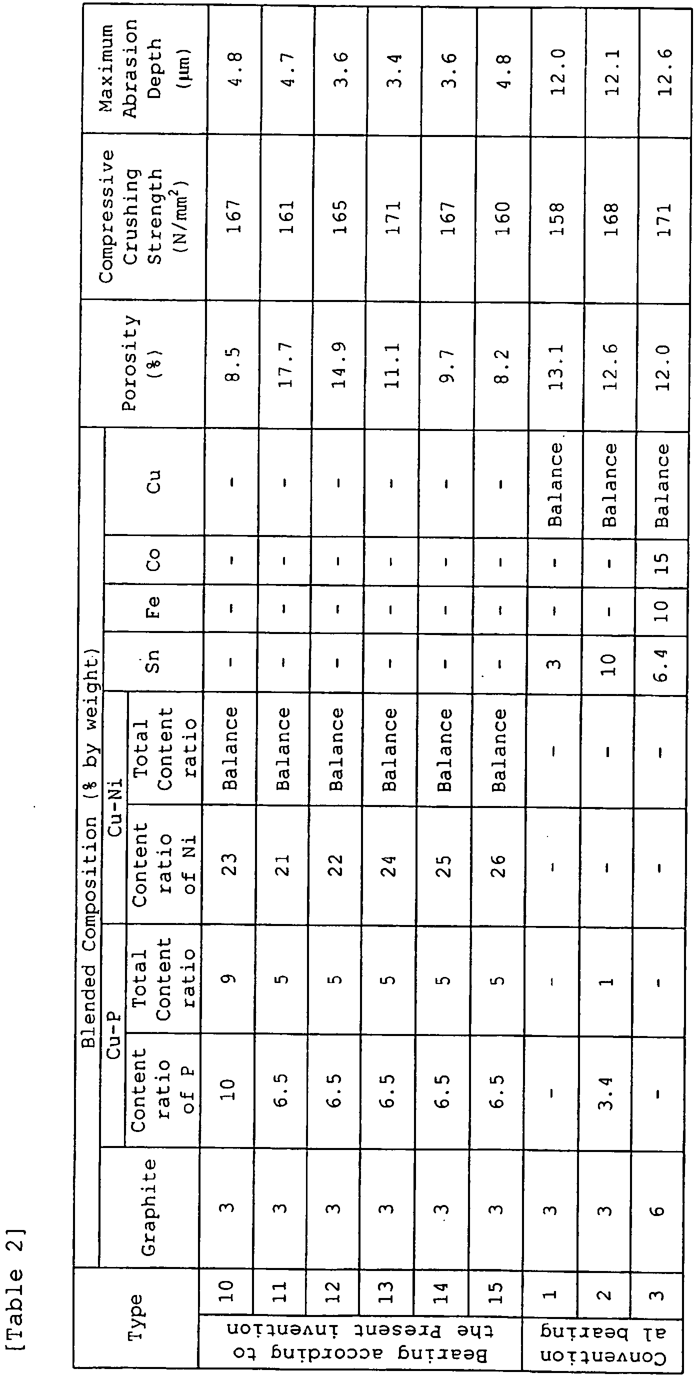

### Industrial Applicability

As clearly seen from the results shown in Tables 1 and 2, the bearings 1 to 15 according to the invention all have excellent wear and corrosion resistances caused by the Cu-Ni based sintering metal constituting the basis material thereof, and high-strength caused by improvement of the sintering property of the P component distributed on the boundary between the Cu-Ni alloy particles. In particular, when being used as the bearings of the motor-type fuel pump, the bearings 1 to 15 exert still more excellent wear resistance during the flow of gasoline at a high pressure and speed, in cooperation with formative action of the fluid lubricating film caused by the pores and improving effect of the wear resistance caused by the free graphite. In contrast, although the conventional bearings 1 to 3 made of the Cu based sintering metal have the same high-strength as that of bearings according to the invention, the conventional bearings 1 to 3 have relatively rapid abrasion speed and use life span ends within a relatively short time.

As mentioned above, the bearing according to the invention exerts excellent wear resistance, even when being used as the motor-type fuel pump of an engine using a general liquid fuel as well as under the environments where the bearing undergoes high surface-pressure from a rotating shaft by downsizing and high power driving of the motor-type fuel pump and is also exposed to the high speed flow of the liquid fuel, and furthermore even when the liquid fuel contains sulfur or compounds thereof as impurities. Therefore, it is possible to cope with downweighting and high performance tendency of the engine using the liquid fuel with sufficient satisfaction.

## Claims

1. A wear resistant bearing of a motor-type fuel pump comprising:
a sintered body of compacted powders having a blended composition which includes 1 to 5% of graphite, 2 to 9% of Cu-P alloy containing 5 to 10% of P, Cu-Ni alloy containing 21 to 26% of Ni, and the balance, in % by weight;
**characterized in that** the sintered body made of a Cu-Ni based sintering metal has a structure in which pores are dispersed on a basis material of Cu-Ni alloy particles at a porosity within a range of 8 to 18%, and P components and free graphite are distributed on a boundary between the Cu-Ni alloy particles and in the pores, respectively.

## Patentansprüche

1. Verschleißfeste Lagerung für eine Motortreibstoffpumpe, umfassend:
einen Sinterkörper aus komprimierten Pulvern mit einer gemischten Zusammensetzung, die 1 bis 5 % Graphit, 2 bis 9 % einer Cu-P-Legierung, die 5 bis 10 % an P enthält, Cu-Ni-Legierung, die 21 bis 26 % an Ni enthält, und den Restbetrag, in Gewichtsprozent, einschließt;
**dadurch gekennzeichnet, dass** der aus einem Sintermetall auf Cu-Ni-Basis hergestellte Sinterkörper eine Struktur hat, in der Poren auf einem Basismaterial aus Cu-Ni-Legierungspartikeln bei einer Porosität im Bereich von 8 bis 18 % verteilt sind, und P-Komponenten und freier Graphit auf einer Grenze zwischen den Cu-Ni-Legierungspartikeln bzw. in den Poren verteilt sind.

## Revendications

1. Roulement résistant à l'usure d'une pompe à carburant du type à moteur comprenant :
un corps fritté de poudres compactées ayant une composition mélangée qui comporte 1 à 5% de graphite, 2 à 9% d'un alliage Cu-P contenant 5 à 10% de P, un alliage Cu-Ni contenant 21 à 26% de Ni, et le reste, en % en poids ;
**caractérisé en ce que** le corps fritté réalisé en un métal de frittage à base de Cu-Ni a une structure dans laquelle des pores sont dispersés sur un matériau de base de particules d'alliage Cu-Ni à une porosité se trouvant dans une plage allant de 8 à 18%, et des composants de P et le graphite libre sont distribués sur une limite entre les particules d'alliage Cu-Ni et dans les pores, respectivement.
